# EUROPÄISCHE PATENTSCHRIFT

(11) **EP 1 584 498 B1**
(45) Veröffentlichungstag und Bekanntmachung des Hinweises auf die Patenterteilung: **31.12.2008**
(21) Anmeldenummer: 05005547.4
(22) Anmeldetag: 15.03.2005
(51) Int. Cl.: B60D 1/54

(54) **Anhängerkupplung**
Trailer coupling
Attelage de remorque

(30) Priorität: 08.04.2004 DE 202004005795 U
(43) Veröffentlichungstag der Anmeldung: 12.10.2005
(73) Patentinhaber: WESTFALIA - Automotive GmbH, 33378 Rheda-Wiedenbrück (DE)
(72) Erfinder: Abels, Frank O., 29633 Munster (DE); von Alm, Günther, 29614 Soltau (DE)
(74) Vertreter: Bregenzer, Michael

(56) Entgegenhaltungen:
- EP-A- 1 380 445
- DE-A1- 10 023 640
- DE-A1- 10 023 641
- DE-A1- 10 104 185
- DE-A1- 10 243 045
- DE-U1-6202004 006 66
- US-A- 4 109 930

## Beschreibung

Die Erfindung betrifft eine Anhängekupplung gemäß dem Oberbegriff des Anspruchs 1.

Eine solche Anhängekupplung geht aus der DE 100 23 640 A1 hervor.

Ein mit einer Kugel versehener Kupplungsarm wird mittels einer Vorrichtung zum Absenken und Schwenken aus einer von außerhalb des Kraftfahrzeuges z.B. nicht sichtbaren Ruhestellung in eine zum Befestigen eines Anhängers geeignete Betriebsstellung motorisch oder manuell angetrieben bewegt.

Es sind verschiedene Ausführungsformen solcher motorisch angetriebener Anhängekupplungen bekannt, z.B. aus der DE 198 26 618, DE 199 44 264 und DE 100 04 523, bei denen eine senkrecht stehende Kugelstange durch motorischen Antrieb zunächst axial nach unten bewegt werden, so dass die Kugel der Kugelstange unterhalb des Stoßfängers liegt, danach wird die Kugelstange um ca. 90 DEG seitlich verdreht und anschließend motorisch wieder angehoben, bis die Kugelstange sich in der Betriebsstellung befindet. Diese Ausführungsformen haben folgende Nachteile:

Die Bodenfreiheit reicht (je nach Fahrzeugtyp) gelegentlich nicht aus, besonders wenn das Fahrzeug über einer Bordsteinkante steht.

Die senkrecht angeordnete Kugelstange hat eine Bauform, die bei modernen Fahrzeugen mit besonders niedrig liegender Kofferraumkante nicht in das Fahrzeug integriert werden kann.

Aufwendige Konstruktion - teilweise mit 2 Motoren - um die drei Bewegungsschritte Senken, Schwenken, Heben zu realisieren.

Aufwendige Steuerung der Bewegungsschritte entweder mechanisch oder elektrisch.

Passgenaue und damit teure Führungen erforderlich, die wegen der eingeleiteten Betriebskräfte teure Materialien und Bearbeitungsverfahren notwendig machen.

Es sind weitere Ausführungsformen bekannt, bei denen die Kugelstange an einem fahrzeugfesten Drehlager angeordnet sind und durch einen Motor die Kugelstange aus einer unterhalb des Fahrzeugbodens befindlichen Ruhestellung in die Betriebsstellung geschwenkt wird, wie z.B. in DE 196 54 867 und DE 196 12 959 oder WO 98/57 813 beschrieben. Diese Ausführungsformen haben folgende Nachteile:

Die Bodenfreiheit reicht bei bestimmten Ausführungsformen und Fahrzeugen ebenfalls nicht aus.

Bei einigen Fahrzeugformen sind sie wegen der Art des Fahrzeugbodens nur schwer oder gar nicht zu integrieren.

Die Getriebemotoren sind hohen Belastungen ausgesetzt, wodurch sie aufwendig und teuer werden. Es sind bei bestimmten Ausführungsformen zum Festsetzen der Kugelstange zusätzliche Verriegelungsvorrichtungen erforderlich, die starkem Verschleiß unterliegen und teuer in der Herstellung sind.

Die Hauptschwenklager unterliegen starken Betriebskräften und müssen daher in aufwendigen und teuren Techniken hergestellt werden.

Es sind schließlich Ausführungsformen bekannt, z.B. DE 100 23 640 und DE 101 04 185, bei denen die Kugelstange schwenkbar in einem Lagerblock sitzt, wobei der Lagerblock selber um eine in Fahrzeugrichtung angeordnete Achse schwenken kann, wodurch eine senkende und danach schwenkende Bewegung erzeugt wird. Diese Ausführungsform, die sich zwar sehr gut in Fahrzeuge integrieren lässt, hat dennoch folgende Nachteile:

Zur Realisierung der Bewegung sind unter Umständen 2 Motoren erforderlich

Es gibt wiederum drei Bewegungsschritte - Senken - Drehen - Heben - dazu ist eine spezielle Steuerung erforderlich

Die Herstellung ist wegen zweier großer, die ganz Last aufnehmenden Lager aufwendig und teuer.

Nachdem verschiedene motorisch angetriebene Anhängekupplungen mittlerweile produziert werden, und es sich herausgestellt hat, dass bekannte Typen in der Herstellung für den automobilen Massenmarkt zu teuer sind, ist es die Aufgabe der Erfindung, eine motorisch angetriebene Anhängekupplung zu schaffen, die besonders einfach und billig in der Herstellung ist.

Zur Lösung der Aufgabe ist eine Anhängekupplung gemäß der technischen Lehre des Anspruchs 1 vorgesehen.

Bei der erfindungsgemäßen Anhängekupplung kommen keine Drehlager, Verriegelungsvorrichtungen oder andere Bauteile mit hoher Fertigungsgenauigkeit zur Anwendung. Die zu bewegenden Teile werden innerhalb eines Gehäuses verschoben und ohne Verwendung eines Drehlagers z.B. über eine Kulissenführung in die Gebrauchsstellung befördert und dort durch eine Spindel nach dem Prinzip des Schraubstocks festgeklemmt.

Durch einen Anstellwinkel einer schiefen Ebene, auf der die zu bewegenden Teile innerhalb des Gehäuses verschoben werden, kann die Absenkhöhe des Kugelarmes konstruktiv auf das jeweilige Fahrzeug angepasst werden.

Ein Ausführungsbeispiel der Erfindung ist in den folgenden Abbildungen dargestellt. Aus Gründen der Übersichtlichkeit wurde auf die Darstellung des Trägers, mit dem die Anhängerkupplung am Fahrzeug befestigt wird, verzichtet. Ebenso ist die Deckplatte des Gehäuses der Anhängerkupplung nicht dargestellt, da sie den Blick auf die Funktionsbaugruppen verbirgt.

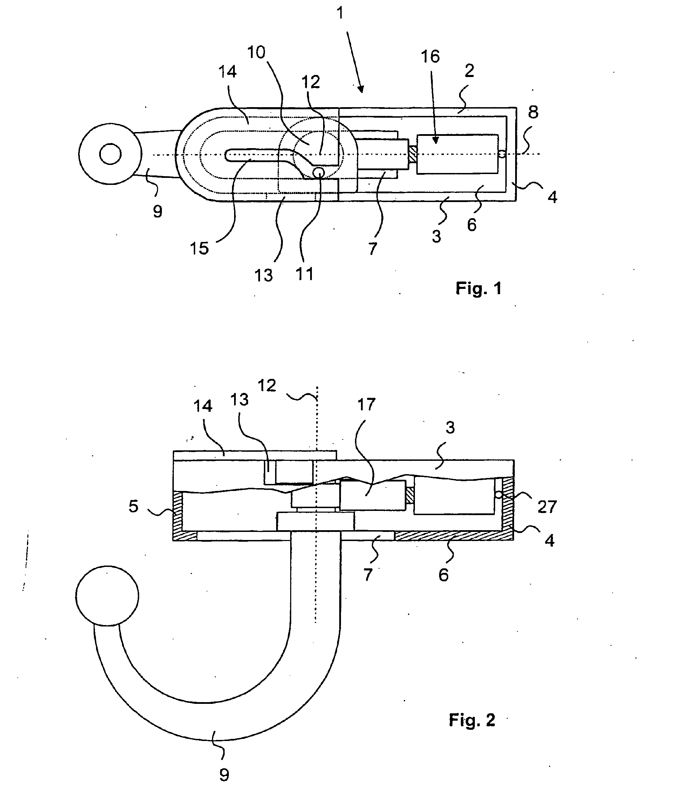

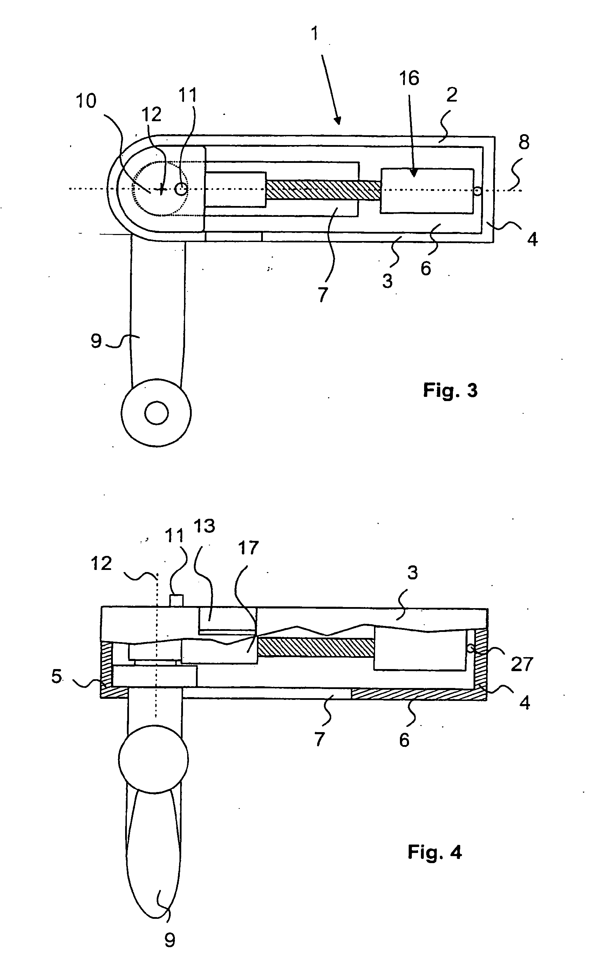

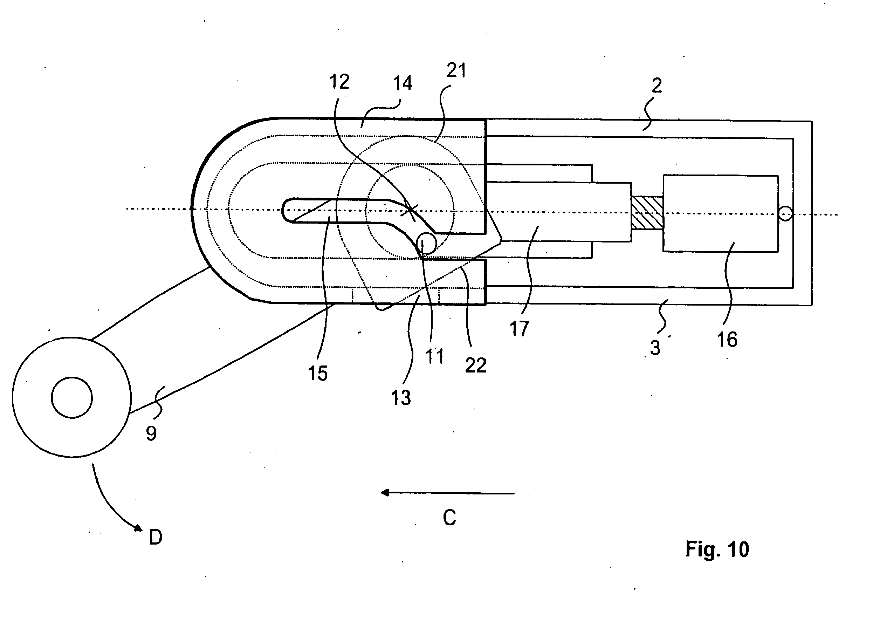

Anhand der Figuren 1 bis 13 wird ein Ausführungsbeispiel der Erfindung erläutert.

Eine beispielhafte Ausführung der erfindungsgemäßen Anhängerkupplung besteht aus einem wannenförmigen Gehäuse 1 mit Seitenwänden 2, 3, einer Gehäuserückwand 4, einer vorderen Gehäusewand 5 sowie einem Gehäuseboden 6 mit einem Schlitz 7.

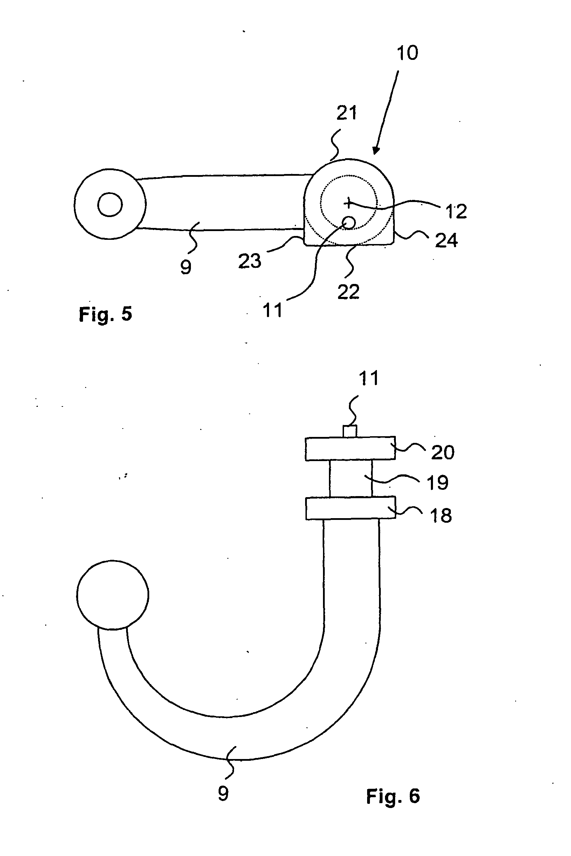

Durch den Schlitz 7 im Gehäuseboden 6 ragt ein Kugelarm 9 hindurch. Der sich im Gehäuse 1 befindliche Teil des Kugelarmes 9 ist als ein Drehachsglied 10 ausgeführt. Das Drehachsglied 10 besitzt im unteren Teil eine zylindrische Form 18, dessen Durchmesser größer als die lichte Weite des Schlitzes 7. Der obere Teil des Drehachsgliedes 10 ist asymmetrisch und wird im Zusammenhang mit Fig. 5 näher beschrieben. Zwischen dem oberen und unteren Teil des Drehachsgliedes 10 ist eine Ringnut 19 angeordnet, in die eine Anlenkung 17 eines Linearantriebes 16 eingreift. Der Linearantrieb 16 ist an der Gehäuserückwand 4 in einem Lager 27 schwenkbar gelagert.

Fig. 1 zeigt die Anhängerkupplung in Nichtgebrauchsstellung in einer Draufsicht, Fig. 2 in einer Seitenansicht.

Der Linearantrieb 16 ist ganz eingefahren, der Kugelarm 9 ist im Schlitz 7 in Richtung Gehäuserückwand 4 zurückgezogen. Der Kugelarm 9 steht parallel zu einer Längsachse 8.

Fig. 3 zeigt die Anhängekupplung in der Gebrauchsstellung in einer Draufsicht, Fig. 4 in einer Seitenansicht. Eine Kulisse 14 ist hier nicht dargestellt, um die Lage des Drehachsgliedes in der Gebrauchsstellung zu zeigen.

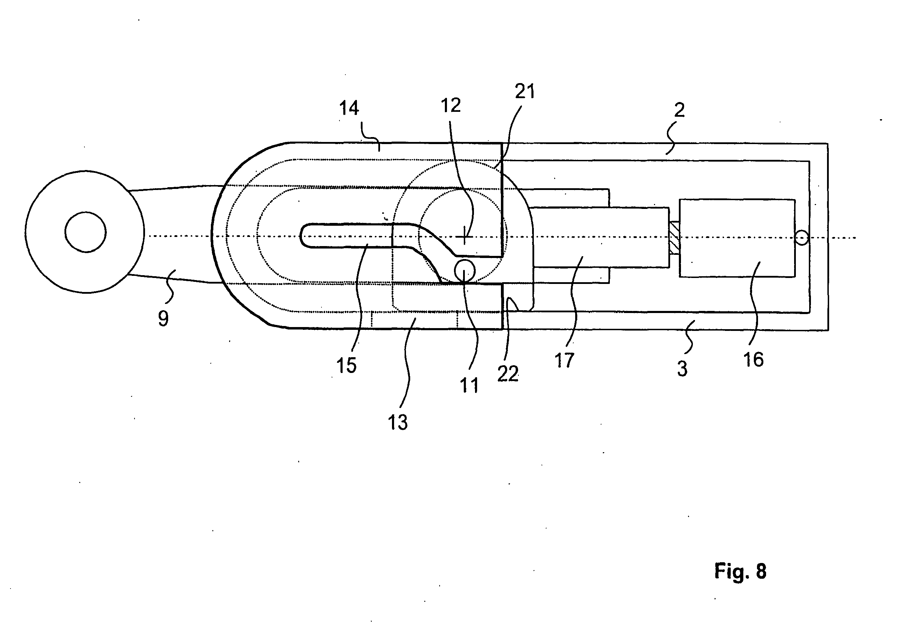

Der an der Ringnut 20 am Drehachsglied 10 angreifende Linearantrieb 16 ist ausgefahren und hat den Kugelarm 9 gegen die vordere Gehäusewand 5 geschoben. Während dieser Bewegung hat der Kugelarm 9 durch das Zusammenwirken eines Stifts 11 und einer Kulisse 14 eine Schwenkbewegung um eine Schwenkachse 12 durchgeführt, welche in den Fig. 8 bis 13 näher erläutert wird.

In der Gebrauchsstellung ist der Kugelarm 9 mit Seitenflächen 23,24 und dem halbzylindrischen Teil 21 des Drehachsgliedes 10 zwischen der vorderen Gehäusewand 5 sowie der hinteren 2 und der vorderen Seitenwand 3 festgesetzt. Dadurch wird ein Grossteil der Kräfte, die von außen z.B. durch einen Anhänger auf den Kugelarm 9 einwirken, in das Gehäuse 1 eingeleitet. Nur ein kleiner Teil dieser Kräfte wirkt auf den Linearantrieb 16.

Fig. 5 zeigt den Kugelarm 9 mit dem Drehachsglied 10 in einer Draufsicht, Fig. 6 in einer Seitenansicht.

Das Drehachsglied 10 besteht aus einem unteren zylindrischen Teil 18 und einem oberen Teil, der aus einem halbzylindrischen Teil 21, und einem halbquaderförmigen Teil mit den geraden Flächen 22, 23, 24 zusammengesetzt ist, besteht. Zwischen dem unteren und oberen Teil ist eine Ringnut 19 angeordnet, an der der Linearantrieb 16 mit der Anlenkung 17 angreift.

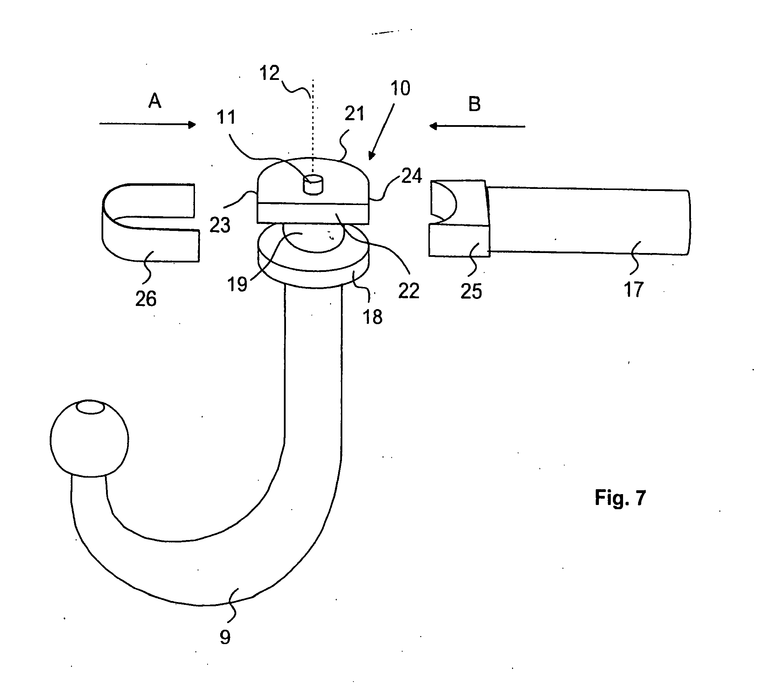

Fig. 7 zeigt die Verbindung zwischen Kugelarm 9 und Linearantrieb 16 in einer Explosionsdarstellung.

An der Anlenkung 17, die z.B. Teil einer Gewindehülse eines Spindelantriebes sein kann, befindet sich auf der dem Drehachsglied 10 zugewandten Seite eine teilkreisförmige Lagerfläche 25, deren Radius dem Radius der Ringnut 19 entspricht. Eine U-förmige Lagerfläche 26, die z.B. als U-förmiger Blechstreifen ausgeführt sein kann, umfasst den Kugelarm 9 in der Ringnut 19 und bildet bei Zusammenführung beider Teile in Pfeilrichtungen A,B mit der Lagerfläche 25 ein kreisförmiges Lager, in dem sich der Kugelarm 9 um die Schwenkachse 12 drehen kann. Die Verbindung zwischen den Lagerteilen 25,26 ist hier nicht näher dargestellt, sie kann z.B. durch eine Schraub- oder Nietverbindung realisiert sein.

Die Fig. 8 bis 13 zeigen den Ablauf eines Ausschwenkvorganges, der Einschwenkvorgang läuft sinngemäß in umgekehrter Reihenfolge ab.

In Fig. 8 befindet sich der Kugelarm 9 in der Nichtgebrauchsstellung. Der Stift 11 hat noch nicht in den Kulissenschlitz eingegriffen. Die gerade Fläche 22 und der halbzylindrische Teil 21 des Drehachsgliedes 10 liegen an der hinteren und vorderen Gehäusewand 2,3 an.

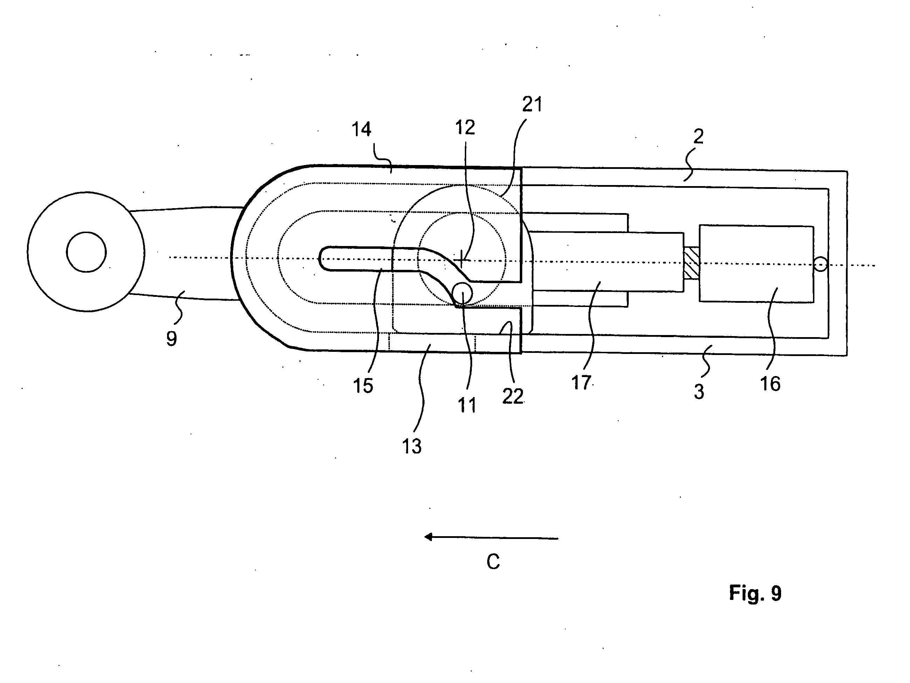

In Fig. 9 hat der Linearantrieb 16 die Anlenkung 17 und damit den Kugelarm 9 in Pfeilrichtung C bewegt. Der Stift 11 greift in einen Kulissenschlitz 15 ein. An dieser Stelle endet die rein lineare Bewegung des Kugelarmes 9.

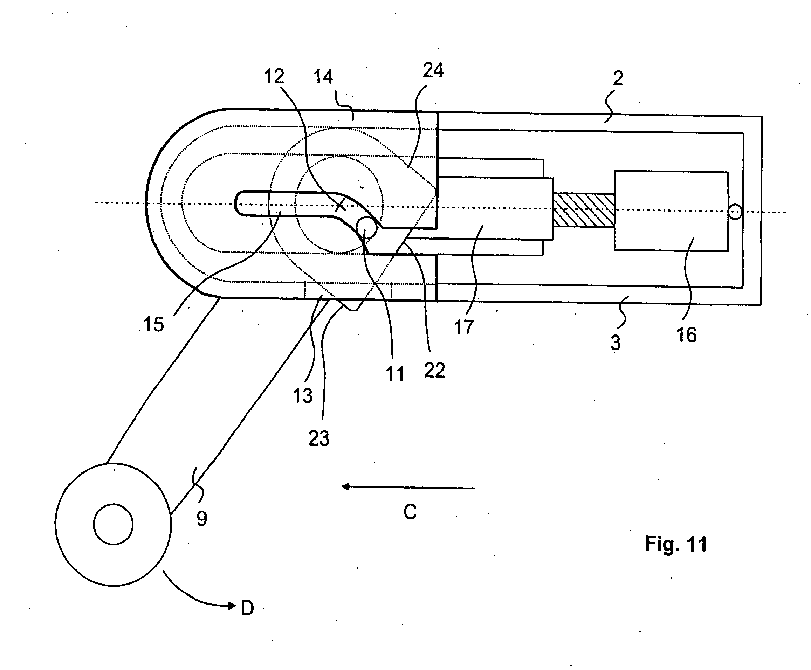

In Fig. 11 ist der Schwenkvorgang eingeleitet. Der Stift 11 folgt der Krümmung des Kulissenschlitzes 15, dadurch wird das Drehachsglied 10 und damit der Kugelarm 9 um die Schwenkachse 12 in Pfeilrichtung D geschwenkt. Die Ecke, die aus den Seitenflächen 22,23 gebildet wird, taucht in einen Gehäusedurchbruch 13 ein. Die Bewegungen des Drehachsgliedes 10 sind in Längsrichtung des Gehäuses 1 durch den Linearantrieb 16 und rechtwinklig dazu durch den an der Wand des Kulissenschlitzes 15 anliegenden Stift 11 sowie durch die an der hinteren Seitenwand 2 anliegenden halbzylindrischen Teil 21 begrenzt.

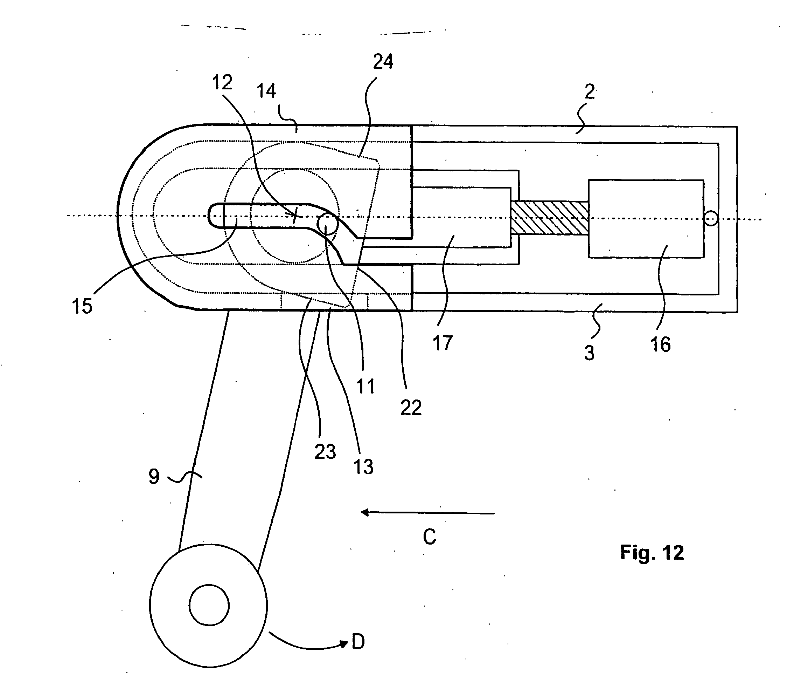

In Fig. 11 und 12 ist der weitere Ablauf des Schwenkvorganges dargestellt.

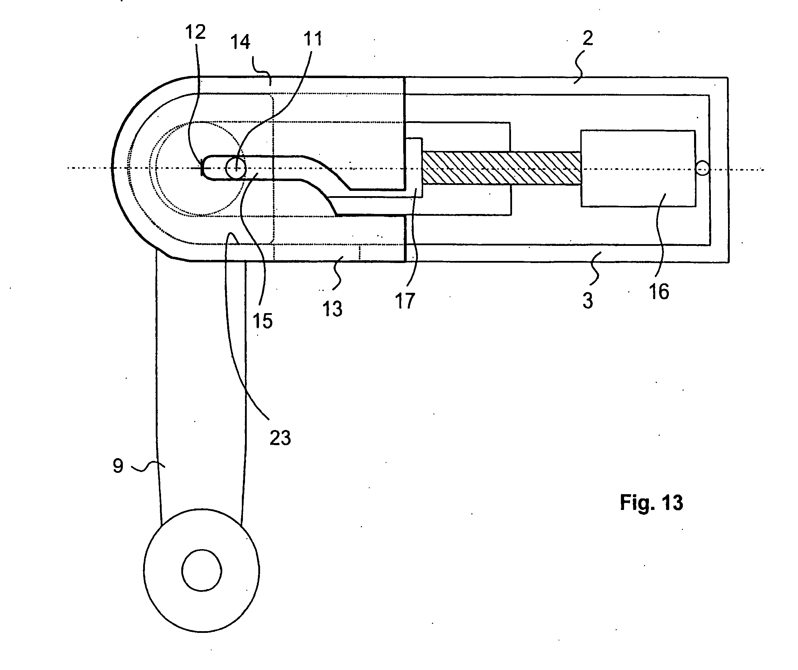

In Fig. 13 ist der Schwenkvorgang abgeschlossen, der Kugelarm 9 ist in der Gebrauchsstellung. Der Kugelarm 9 ist mit Seitenflächen 23,24 und dem halbzylindrischen Teil 21 des Drehachsgliedes 10 zwischen der vorderen Gehäusewand 5 sowie der hinteren 2 und der vorderen Seitenwand 3 festgesetzt. Dadurch werden der Grossteil der Kräfte, die von außen z.B. durch einen Anhänger auf den Kugelarm 9 einwirken, in das Gehäuse 1 eingeleitet. Nur ein kleiner Teil dieser Kräfte wirken auf den Linearantrieb 16. Solange der Linearantrieb 16 sich nicht wieder in die entgegengesetzte Richtung bewegt, bleibt der Kugelarm 9 fest in der Gebrauchsstellung, von außen einwirkende Kräfte werden in das Gehäuse und entlang der Längsachse 8 in den Linearantrieb 16 eingeleitet.

## Patentansprüche

1. Anhängekupplung für Kraftfahrzeuge, insbesondere Personenkraftwagen, mit einem Kupplungsarm (9), der einends ein hochstehend angeordnetes Kopfstück zum lösbaren Befestigen eines Anhängers trägt und anderenends mit einem bewegbar in einem Gehäuse (1) gelagerten Drehachsglied (10) fest verbunden ist, wobei der Kupplungsarm (9) mittels einer Vorschubeinrichtung (16) zwischen einer am Fahrzeug angeordneten nach hinten gerichteten Gebrauchsstellung und einer weiter vorne angeordneten Nichtgebrauchsstellung hin und her verstellbar ist, wobei das Drehachsglied (10) einen halbzylindrischen Teil (21) und einen quaderförmigen Teil aufweist, wobei sich die Verstellbewegung aus zwei Bewegungen zusammensetzt, bei denen das Drehachsglied (10) ausgehend von der Nichtgebrauchsstellung in einem ersten Bewegungsabschnitt in dem Gehäuse (1) verschoben und in einem zweiten Bewegungsabschnitt verschwenkt wird, so dass der Kupplungsarm (12) nach Vollendung beider Bewegungen, die sich überlagern können, die Gebrauchsstellung einnimmt, **dadurch gekennzeichnet, dass** das Drehachsglied (10) beim Bewegen in Richtung der Gebrauchsstellung mittels der Vorschubeinrichtung (16) in eine U-förmige Aufnahme des das Drehachsglied (10) umhüllenden Gehäuse (1) einschwenkt, dass das Drehachsglied (10) einen halbzylindrischen Teil (21) und einen quaderförmigen Teil aufweist, die insgesamt ein schildförmiges Teil bilden, wobei kurze Seiten (23, 24) des quaderförmigen Teils tangential in den halbzylindrischen Teil (21) übergehen, dass die Mittelachse (12) des halbzylindrischen Teils (21) in die Mittelachse des Kupplungsarmes übergeht, dass der Abstand einer langen Seite (22) des quaderförmigen Teils von der Mittelachse des Teilzylinders dem Radius des halbzylindrischen Teils (21) entspricht, dass ein Mitnehmerbolzen (11) am Oberteil des Drehachsgliedes (10) exzentrisch zur Mittelachse des Teilzylinders (12) angeordnet ist, der in einer am Gehäuse (1) angeordneten Kulisse (14,15) läuft und dabei durch die Kraft eines manuellen oder kraftangetriebenen Stellantriebes (16) das Drehachsglied (10) in Drehung um ca. 90 Grad um die Mittelachse versetzt, wobei das Gehäuse eine Ausnehmung (13) aufweist, in die das Drehachsglied (10) beim Schwenken eintauchen kann, dass das schildförmige Teil beim Schwenken des Drehachsglieds (10) in Richtung der Gebrauchsstellung mittels des Stellantriebs (16) in die u-förmige Aufnahme des Gehäuses (1) einschwenkt und Seitenflächen (23, 24) des quaderförmigen Teils und des halbzylindrischen Teils (21) in der u-förmigen Aufnahme festgesetzt sind und das Drehachsglied (10) durch den Stellantrieb (16) in der Gebrauchsstellung verdrehsicher gehalten wird.

2. Anhängekupplung für Kraftfahrzeuge nach Anspruch 1 **dadurch gekennzeichnet, dass** das Drehachsglied (10) in Zahnradform ausgebildet ist und am Ende seiner Linearbewegung auf eine am Gehäuse angeordnete Zahnstange trifft, in die das zahnradförmige Drehachsglied dann eingreift und die durch die Kraft des Linearantriebes (16) zur Drehbewegung des Kupplungsarms (9) führt.

3. Anhängekupplung für Kraftfahrzeuge nach einem der vorhergehenden Ansprüche, **dadurch gekennzeichnet, dass** das Drehachsglied (10) durch einen Pressdruck des Stellantriebes (16) verdrehsicher in der Gebrauchsstellung gehalten wird.

4. Anhängekupplung für Kraftfahrzeuge nach einem der vorhergehenden Ansprüche, **dadurch gekennzeichnet, dass** der Mitnehmerbolzen (11) in einen Kulissenschlitz (15) eingreift, und dass das Drehachsglied (10) und damit der Kugelarm (9) durch eine Krümmung des Kulissenschlitzes (15) bei einer Betätigung des Stellantriebs (16) um seine Schwenkachse (12) geschwenkt wird.

5. Anhängekupplung nach Anspruch 1, **dadurch gekennzeichnet, dass** das Gehäuse (1) einen durchgehenden Gehäuseboden (6) oder mindestens zwei hintereinander in unterschiedlichen Winkeln zur Horizontale angeordnete Gehäusebodenteile aufweist.

## Claims

1. Trailer coupling for motor vehicles, in particular motor cars, with a coupling arm (9) supporting a raised head section for releasably attaching a trailer at one end, while the other end is permanently connected to a hinge element (10), which is movably bearing-mounted in a housing (1), wherein the coupling arm (9) is adjustable by means of a feed mechanism (16) between a position of use in which it is located on the vehicle and oriented towards the rear and an inoperative position which is further forward, wherein the hinge element (10) comprises a semi-cylindrical part (21) and a rectangular part, wherein the adjusting movement combines two movements whereby the hinge element (10), starting from the inoperative position, is displaced in the housing (1) in a first movement section and swivelled in a second movement section, so that the coupling arm (9) adopts its position of use on completion of both movements, which may be superimposed on one another, **characterised in that** the hinge element (10), as it moves towards its position of use, is pivoted into a U-shaped location of the housing (1) enclosing the hinge element (10) by means of the feed mechanism (16), **in that** the hinge element (10) comprises a semi-cylindrical part (21) and a rectangular part which together form a shield-shaped part, wherein short sides (23, 24) of the rectangular part merge tangentially into the semi-cylindrical part (21), **in that** the central axis (12) of the semi-cylindrical part (21) merges into the central axis of the coupling arm, **in that** the distance of a long side (22) of the rectangular part from the central axis of the semi-cylinder corresponds to the radius of the semi-cylindrical part (21), **in that** a driving pin (11) provided at the top of the hinge element (10) is eccentrically located relative to the central axis of the semi-cylinder (12) and is running in a gate (14, 15) provided on the housing (1) while offsetting the hinge element about the central axis by approximately 90 degrees under the power of a manually or power-driven actuator (16), the housing having a recess (12) into which the pivoting hinge element (10) can dip, **in that** the shield-shaped part is pivoted into the U-shaped location of the housing (1) as the hinge element (10) is pivoted towards the position of use by means of the actuator (16), **in that** side faces (23, 24) of the rectangular part and the semi-cylindrical part (21) are located in the U-shaped accommodation, and **in that** the hinge element (10) is non-rotatably held in the position of use by the actuator (16).

2. Trailer coupling for motor vehicles according to claim 1, **characterised in that** the hinge element (10) is designed in the shape a gear and at the end of its linear movement meets a rack located on the housing, which the gear-shaped hinge element then engages, the power of the linear drive resulting in the rotary movement of the coupling arm (9).

3. Trailer coupling for motor vehicles according to any of the preceding claims, **characterised in that** the hinge element (10) is non-rotatably held in its position of use by the pressure of the actuator (16).

4. Trailer coupling for motor vehicles according to any of the preceding claims, **characterised in that** the driving pin (11) engages a gate slot (15), and **in that** the hinge element (10) and thus the ball arm (9) are swivelled about the pivot axis (12) by a curvature of the gate slot (15) when the actuator (16) is actuated.

5. Trailer coupling according to claim 1, **characterised in that** the housing (1) has a continuous housing base (6) or at least two housing base parts disposed one behind the other at different angles relative to the horizontal.

## Revendications

1. Attelage de remorque pour véhicules automobiles, en particulier pour véhicules de tourisme, comportant un bras de couplage (9), dont une extrémité porte une tête dirigée en hauteur pour l'attelage amovible d'une remorque et dont l'autre extrémité est reliée de manière fixe à un pivot (10) monté de manière mobile dans un boîtier (1), le bras de couplage (9) pouvant être déplacé par un dispositif d'avance (16) en va-et-vient entre une position d'utilisation, disposée sur le véhicule et orientée vers l'arrière, et une position de non-utilisation disposée davantage vers l'avant, le pivot (10) comportant une partie semi-cylindrique (21) et une partie parallélépipédique, le mouvement de déplacement étant composé de deux mouvements, pendant lesquels le pivot (10), à partir de la position de non-utilisation, est déplacé sur un premier tronçon de mouvement dans le boîtier (1) et pivote sur un deuxième tronçon de mouvement, de telle sorte que, à la fin des deux mouvements qui peuvent se superposer, le bras de couplage (9) est amené dans la position d'utilisation, **caractérisé en ce que** le pivot (10) pendant le déplacement vers la position d'utilisation au moyen du dispositif d'avance (16) pivote dans un logement en forme de U du boîtier (1) entourant le pivot (10), **en ce que** le pivot (10) comporte une partie semi-cylindrique (21) et une partie parallélépipédique qui forment ensemble une partie en forme de bouclier, des côtés courts (23, 24) de la partie parallélépipédique, se prolongeant tangentiellement par la partie semi-cylindrique (21), **en ce que** l'axe médian (12) de la partie semi-cylindrique (21) est prolongé par l'axe médian du bras de couplage, **en ce que** la distance entre un côté long (22) de la partie parallélépipédique et l'axe médian du cylindre partiel correspond au rayon de la partie semi-cylindrique (21), **en ce qu'**un doigt d'entraînement (11) est disposé sur la partie supérieure du pivot (10) de manière excentrée par rapport à l'axe médian (12) du cylindre partiel, lequel doigt se déplace dans une coulisse (14, 15) montée sur le boîtier (1) et, en outre, sous l'effet d'une force d'un mécanisme de commande (16), manuel ou actionné de façon motorisée, entraîne en rotation le pivot (10) sur environ 90 degrés autour de l'axe médian, le boîtier comportant un évidement (13), dans lequel peut s'engager le pivot (10) au moment du pivotement, **en ce que** la partie en forme de bouclier, pendant le pivotement du pivot (10) vers la position d'utilisation, pivote à l'intérieur du logement en forme de U du boîtier (1) au moyen du mécanisme de commande (16), et des faces latérales (23, 24) de la partie parallélépipédique et de la partie semi-cylindrique (21) sont immobilisées dans le logement en forme de U, et le pivot (10) est maintenu immobile en rotation dans la position d'utilisation par le mécanisme de commande (16).

2. Attelage de remorque pour véhicules automobiles selon la revendication 1, **caractérisé en ce que** le pivot (10) est réalisé en forme de roue dentée et à la fin de son mouvement linéaire vient buter sur une crémaillère montée sur le boîtier, dans laquelle le pivot en forme de roue dentée s'engage alors et laquelle induit le mouvement de rotation du bras de couplage (9) sous l'effet de la force du système d'entraînement linéaire (16).

3. Attelage de remorque pour véhicules automobiles selon l'une des revendications précédentes, **caractérisé en ce que** le pivot (10) est maintenu immobile en rotation dans la position d'utilisation sous l'effet d'une pression exercée par le mécanisme de commande (16).

4. Attelage de remorque pour véhicules automobiles selon l'une des revendications précédentes, **caractérisé en ce que** le doigt d'entraînement (11) s'engage dans une fente de coulisse (15), et **en ce que**, au moment d'un actionnement du mécanisme de commande (16), le pivot (10), sous l'effet d'une courbure de la fente de coulisse (15), pivote autour de son axe de pivotement (12) et entraîne avec lui le bras de couplage (9).

5. Attelage de remorque selon la revendication 1, **caractérisé en ce que** le boîtier (1) comporte un fond (6) continu ou au moins deux parties de fond disposées l'une derrière l'autre selon des angles différents par rapport à l'horizontale.
